(19) Europäisches Patentamt
European Patent Office
Office européen des brevets

(11) **EP 4 134 870 A1**

(12) **EUROPEAN PATENT APPLICATION**

(43) Date of publication:
**15.02.2023 Bulletin 2023/07**

(21) Application number: **21191340.5**

(22) Date of filing: **13.08.2021**

(51) International Patent Classification (IPC):
**G06N 3/04** (2000.01)     **G06V 10/82** (2022.01)
**G06V 20/58** (2022.01)     **B60W 60/00** (2020.01)
**G05D 1/02** (1968.09)

(52) Cooperative Patent Classification (CPC):
**G05D 1/0246; B60W 60/0015; G05D 1/0088;
G06N 3/045; G06V 10/82; G06V 20/58;**
G05D 2201/0213

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Volkswagen Aktiengesellschaft
38440 Wolfsburg (DE)**

(72) Inventors:
• **Varghese, Serin
38126 Braunschweig (DE)**
• **Schneider, Jan David
38446 Wolfsburg (DE)**

(54) **A METHOD FOR ASSESSMENT OF A NEURAL NETWORK SUITABLE FOR PERCEPTION OF AN ENVIRONMENT OF A VEHICLE WITH REGARD TO THE SAFE USE, AN ASSISTANCE SYSTEM, A VEHICLE AND A COMPUTER PROGRAM PRODUCT**

(57)     The invention relates to a method for assessment of a neural network (NN) suitable for perception of an environment of a vehicle (10), in particular of an automated or autonomous driving vehicle,
in order to find a neural network (NN), especially among a plurality of neural networks, which is safe for the use in the vehicle (10),
the method comprising the following steps:
- measuring an accuracy of the neural network (NN) in order to provide an accuracy metric (m) of the neural network (NN),
- assigning a safety coefficient ($\gamma$) to the accuracy metric (m) of the neural network (NN) in order to provide a weighted metric (mr).

Fig. 1

**Description**

The invention is related to a method for assessment of a neural network suitable for perception of an environment of a vehicle, in particular of an automated or autonomous driving vehicle, in order to find a neural network, especially among a plurality of neural networks, which is safe for the use in the vehicle according to the independent method claim. Further, the invention is related to a corresponding assistance system for a vehicle according to the independent system claim. Furthermore, the invention is related to a vehicle comprising a corresponding assistance system according to the independent device claim. Moreover, the invention is related to a computer program product according to the independent product claim.

Modern driver assistance systems, used for partial- or fully automated driving, commonly use machine learning to assess the vehicle surroundings, including objects, pedestrians and other vehicles. Using neural networks, such as deep neural networks, different types of sensor data (camera, radar, lidar) can be processed to produce a world model of the surrounding environment. As part of the perception chain, neural networks are used for different tasks such as semantic segmentation or object detection. For semantic segmentation, the neural network outputs a pixel-wise labelling of the input images according to a pre-defined set of class labels, while networks for object detection render bounding boxes around the objects of defined target classes.

In both cases, known neural networks are convolutional neural networks which parametrize a number of weights during training with respect to the input using ground truth data. Using gradient based optimization, the parameters can be tuned and the underlying function is optimized such that the loss quantified by a loss function is minimized. In an iterative training process, the neural network learns a function representing the mapping from the input to output data. Known neural networks usually consist of various layers with high numbers of filters, resulting in a usually very large number of trainable parameters and thus learn a complex highdimensional underlying function.

While convolutional neural networks outperform classical computer vision approaches for image processing, neural networks come with a number of challenges. This includes that most networks tend to be unstable towards different kinds of image augmentations, for example naturally occurring augmentations as e.g. rain or fog. This may be true for any other image perturbation, possibly completely unknown to the network from its training data, which is difficult for the network to accurately assess. Generally, networks tend to lack generalization towards unseen before data, i. e. data that is semantically different from its training data. However, having a robust neural network could be essential for diverse real-world applications in various scenarios under various conditions. That is, since the reliable perception of the environment is safety-critical for automated driving, being able to quantify safety-related performance of neural networks is highly desirable to assure the safe functioning of the perception module of the automated vehicle.

Standard performance metrics for assessment of neural networks are for example mean intersection over union (mIoU) or average precision, and mean performance under corruption (mPC) that quantify the robustness of the neural network under adversarial attacks/corruptions. Standard performance and robustness metrics only define how good or how bad the predictions of the neural network are. This gives no understanding of its safety relevance.

Therefore, the aim of the present invention is to derive an assessment method for improving safety of perception functions for automated driving. Especially, the aim of the present invention is to ensure the generalization to unseen/undefined corruption that the automated driving car could encounter. More specifically, the aim of the present invention is to provide a method for assessment of a neural network suitable for perception of an environment of a vehicle, in particular of an automated or autonomous driving vehicle, in order to find a neural network, especially among a plurality of neural networks, which is safe for the use in the vehicle, which may be executed with low computational effort and which can provide trustful results, convenient use, preferably in an easy, simple and intuitive way. Also, the aim of the invention is to provide an improved assistance system for a vehicle. Besides, the aim of the invention is to provide a vehicle comprising a corresponding assistance system. Further, the aim of the invention is to provide a computer program product for a corresponding method.

According to the first aspect, embodiments of the invention provide a method for assessment of a neural network suitable for perception of an environment of a vehicle, in particular of an automated or autonomous driving vehicle, in order to find a neural network, especially among a plurality of neural networks, which is safe for the use in the vehicle with the features of the independent method claim. According to the second aspect, embodiments of the invention provide a corresponding assistance system for a vehicle in the vehicle with the features of the independent system claim. According to the third aspect, embodiments of the invention provide a corresponding vehicle comprising a respective assistance system with the features of the independent device claim. According to the fourth aspect, embodiments of the invention provide a corresponding computer program product for a respective method with the features of the independent product claim. Details and features disclosed on individual aspects of the invention also apply to the other aspects of the invention and vice versa.

According to the first aspect, embodiments of the invention provide a method for assessment of a (at least one, especially one after another of a plurality of many) neural network(s) suitable for perception of an environment of a vehicle, in particular of an automated or autonomous driving vehicle, in order to find a (at least one, especially the most trustful one, preferably the safest one) neural network, especially among a plurality of neural networks, which is safe for the use in the vehicle, the method comprising the following steps:

- measuring an accuracy of the neural network in order to provide an accuracy metric of the neural network,

  wherein especially an individual accuracy metric may be provided for each object detected in the environment of a vehicle,
  or wherein a combined accuracy metric may be provided for many or all objects detected in the environment of a vehicle,

- assigning a safety coefficient (i. e. weighting factor) to the accuracy metric of the neural network in order to provide a weighted (i. e. evaluated and/or safety-relevant) metric (i. e. key performance indicator),

wherein especially the safety coefficient may comprise individual weights for corresponding individual accuracy metrics provided individually for each object detected in the environment of a vehicle, which may be summarized to the weighted metric, or wherein the safety coefficient may comprise a complex weight for a combined accuracy metric provided for many or all objects detected in the environment of a vehicle.

The idea is to derive a weighted metric that not only indicates the ability of the neural network to detect relevant objects in a scene, but also takes into account the relevance of each object individually. The weighted metric is evaluated by measuring the network accuracy and applying a weight to each detected object. The relevance of the objects detected may be preferably determined by the distance of these objects from the vehicle.

The significant benefits of the inventive method is:

- Providing a safety-relevant metric which quantifies the ability of the network to detect relevant/important objects in a scene,
- Providing a safety-relevant metric which takes into account both: the performance (or accuracy) of the network, and the importance of each object,
- Providing a safety-relevant metric which requires very low computational effort,
- Providing a safety-relevant metric which can use any kind of accuracy calculation in the first step (e.g. intersection over union, average precision, etc.),
- Providing a safety-relevant metric which may be applied to any detection task (e.g. object detection, semantic segmentation, pedestrian detection, pose estimation, etc.),
- Providing a safety-relevant metric which may be extended towards tasks such as 3D object detection with the use of depth information (either from sensors, or using depth estimation networks),
- Providing a safety-relevant metric which may be used for benchmarking neural networks on this relevance/importance criteria, rather than simply looking at the accuracy.

These advantages are especially important when dealing with automated or autonomous driving vehicles.

As described, the weightage of the accuracy metric (and thus the relevance of the objects) may be determined dependent on the distance of the objects from the vehicle. Additionally and/or instead of this, the weightage of the accuracy metric may be determined dependent on the class of the objects. The weighting may be different for different dynamic objects, for example to prioritize certain vulnerable classes as pedestrians and bicyclists more than more robust traffic participants such as heavy trucks. The weightage for vulnerable classes can preferably be higher. Objects such as the sky and buildings can have lower weightage.

Besides, varying of detection zones may be provided. Preferably, the metric may be independent of the vehicle's detection zone, so that variants can include differently sized detection zones.

In some embodiments, the measuring of the accuracy of the neural network may be executed with the help of an intersection over union evaluation/approach/factor. This approach may be suitable especially for semantic segmentation networks.

In some embodiments, the measuring of the accuracy of the neural network may be executed with the help of a mean average precision evaluation evaluation/approach/factor. This approach may be suitable especially for object detection networks.

In some embodiments, the assigning of the safety coefficient to the accuracy metric of the neural network is provided by weightage of objects detected by the neural network in the environment of the vehicle individually for each object. The weightage of objects may be provided within a combined accuracy metric for many or all objects detected in the environment of the vehicle. Also, it is possible to provide an individual accuracy metric for each object detected by the neural network in the environment of the vehicle. In this case, each individual accuracy metric may be assigned an individual weight, especially dependent on the safety needs of the corresponding object. Thus, the objects in the environment of the vehicle may be individually valued in order to pay attention to the safety issues.

Preferably, the weighted metric for the neural network may be provided for all objects detected by the neural network in the environment of the vehicle. Thus, safety issues may be considered in an improved way.

Especially, an individual accuracy metric may be provided for each object detected in the environment of a vehicle or a combined accuracy metric may be provided for many or all objects detected in the environment of a vehicle. Preferably, the safety coefficient may comprise individual weights for corresponding individual accuracy metrics provided individually for each object detected in the environment of a vehicle, which may be summarized in the weighted metric. It is also possible, that the safety coefficient may comprise a complex weight for a combined accuracy metric provided for all objects detected in the environment of a vehicle. Thus, safety aspects may be considered in an flexible manner.

In some embodiments, a weightage of objects detected by the neural network in the environment of the vehicle is executed in dependence on a distance of the objects to the vehicle. Thus, an easy and understandable approach on how to evaluate the objects in the environment of the vehicle may be provided which requires only low computational effort.

In some embodiments, a weightage of objects detected by the neural network in the environment of the vehicle is executed in dependence on a detection zone with respect to the vehicle in which the objects are detected. Preferably, different detection zones may be determined with respect to the vehicle. Especially, different, in particular distance dependent, values of the safety coefficient may be assigned to different detection zones. Thus, an intuitive and simplified approach on how to evaluate the objects in the environment of the vehicle may be provided which requires only low computational power.

In some embodiments, objects detected in a critical zone near to the vehicle are weighted with a first/higher, especially distance dependent, value of the safety coefficient. Moreover, objects detected in an extended zone, in particular a zone within possible sensor range of the vehicle, may be weighted with a second/lower, especially distance dependent, value of the safety coefficient. Thus, a simple and reliable approach in terms of safety may be provided.

In some embodiments, a weightage of objects detected by the neural network in the environment of the vehicle may be executed in dependence on a size, a class and/or a degree of risk of the objects individually for each object. Especially, a weightage may have a first value, especially a high value, for vulnerable objects, like bicycles and/or pedestrians. Further, a weightage may have a second value, especially a low value, for robust objects, like other vehicles and/or heavy trucks. Furthermore, a weightage may have a third value, especially a very low value, for objects of infrastructure, like buildings, and surroundings, like the sky. Thus, simple and intuitive weighting of objects with respect to the security needs may be provided.

In some embodiments, the method is executed for the neural network using image-based environment models and/or 3D-based environment models. Thus, improved perception of an environment of a vehicle may be provided.

In some embodiments, the neural network is configured to analyze sensor data, especially camera data, radar data and/or lidar data, and/or the neural network is configured to provide image semantic segmentation or object detection. Thus, the neural network may be preferably used for perception tasks in the vehicle, especially an automated or autonomous driving vehicle.

In some embodiments, the method is executed for a variety of neural networks to find a neural network among a plurality of neural networks which receives the highest valuated metric and which is thus the safest for the use in the vehicle for perception of an environment of a vehicle. Thus, the most suitable network with improved safety may be chosen for the use in the vehicle.

According to the second aspect, embodiments of the invention provide an assistance system for a vehicle, in particular for an automated or autonomous driving vehicle, comprising a neural network which receives a sufficient valuated metric by the method as described above, especially a highest valuated metric by the method according to the preceding paragraph. With such a system the same advantages may be achieved as with the method described above. Full reference is made to these advantages in the present case.

Embodiments of the invention provide, according to the third aspect, a vehicle comprising a corresponding assistance system. With such a vehicle, the same advantages may be achieved as with the system described above. Full reference is made to these advantages in the present case.

According to the fourth aspect, embodiments of the invention provide a computer program product comprising a program code for carrying out a method as described above. In other words, the computer program product comprises instructions which, when the program is executed by a computer, cause the computer to carry out embodiments of the method described above. With embodiments of such a computer program product, the same advantages may be achieved as with corresponding embodiments of the method described above. Full reference is made to these advantages in the present case.

Embodiments of the invention and its further developments as well as its advantages will be explained in more detail below using a figure. The figure shows schematically:

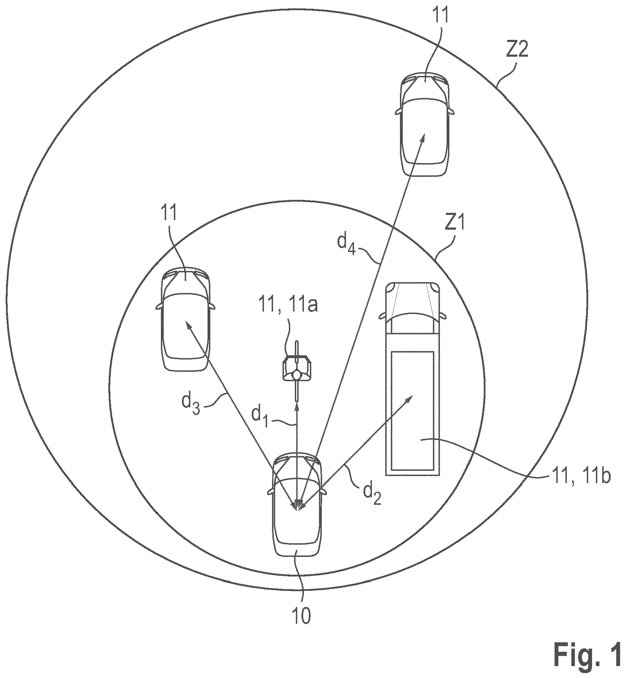

Fig. 1     a possible environment around a vehicle within the meaning of the invention.

Figure 1 serves for explaining an inventive method serving for assessment of a neural network NN suitable for the perception of an environment of a vehicle 10, in particular of an automated or autonomous driving vehicle, in order to find a neural network NN, especially among a plurality of neural networks, which is sufficient with respect to the safety for the use in the vehicle 10.

The method comprises the following steps:

- measuring an accuracy of the neural network NN in order to provide an accuracy metric m of the neural network NN,
- assigning a safety coefficient $\gamma$ to the accuracy metric m of the neural network NN in order to provide a weighted (and/or evaluated and/or safety-relevant) metric mr (or key performance indicator).

The inventive method serves to derive a weighted metric mr that not only indicates the ability of the neural network NN to detect relevant objects 11 in a scene, but also considers safety aspects of each object 11 more flexibly and preferably individually.

The weighted metric mr is evaluated by measuring the accuracy metric m and applying a definite weight (i.e safety coefficient $_\gamma$) to the accuracy metric m. Preferably a corresponding accuracy metric m may be measured for each object 11 detected in the environment of the vehicle 10 individually. More preferably, each accuracy metric m for each object 11 valued with specific weight may be summarized into the weighted metric m, as shown in the following with the help of a formula. In this case, a safety coefficient $\gamma$ may comprise corresponding weights for each accuracy metric m measured for each object 11 individually.

As figure 1 indicates, the weightage of the accuracy metric m (and thus the relevance of the objects 11) may be determined dependent on the distance d1, d2, d3, d4 of the objects 11 from the vehicle 10. Further, the weightage of the accuracy metric m may be determined dependent on the class of the objects 11.

Besides, varying detection zones Z1, Z2 may be provided. Preferably, the weighted metric mr may be independent of the vehicle's detection zone, so that variants may include differently sized detection zones Z1, Z2.

On the contrary to the invention, standard metrics only perform an average across multiple images. Therefore, each object in the image receives the same importance towards the result of the metric computation.

However, in practice, each dynamic object (e.g. vehicle, pedestrian, building, sidewalk, etc.) may be of different importance towards the vehicle 10, especially an automated vehicle. Also, the distance d1, d2, d3, d4 to the vehicle 10 influences the amount of time the vehicle 10 has to react to an object 11 in its trajectory. On the other hand, it might not be of significant importance for a neural network NN to detect objects 11 further away from the vehicle 10. Similar implications may be implemented not only for the longitudinal distance, but also for the lateral distance.

Figure 1 shows two different detection zones Z1, Z2. Figure 1 illustrates, that there may be a certain critical zone Z1 in front of the vehicle 10, where it is highly essential for the neural network NN to detect all objects 11. This is relevant, because the vehicle 10 has less time to react to nearby objects 11 than objects 11 in an extended zone Z2. The amount of remaining time for reacting to the objects 11 decreases with decreasing distance d1, d2, d3, d4 to the vehicle 11.

Therefore, objects 11 within the critical zone Z1 near to the vehicle 10 should contribute more towards the outcome of the safety evaluation of the neural network NN than objects 11 in the extended zone Z2, because the necessity for the detection of objects 11 in the critical zone Z1 is of high importance.

In addition to the accuracy calculation, each dynamic object 11 in the scene of figure 1 may be provided with a corresponding safety coefficient $\gamma$, that increases the outcome of the accuracy on the respective objects 11 to the calculated overall network accuracy.

An embodiment can be visualized with the formula:

$$ mr = \frac{1}{N} \sum_{i=1}^{N} \gamma(d_i) \times m $$

$$ \gamma(d_i) = \begin{cases} 1 - \log(\dfrac{d_i}{r}), & if \quad d_i < r, \\ \dfrac{1}{d_i}, & if \quad d_i \geq r. \end{cases} $$

In the formula, m is the accuracy metric. This may be an intersection over union for semantic segmentation networks, a mean average precision or an F1 score for object detection networks.

For every object 11 in this scene of figure 1, this accuracy metric m is multiplied by a specific value of the safety coefficient $\gamma$ for this object. This safety coefficient $\gamma$ may by conditioned on the distance d1, d2, d3, d4 between the object 11 and the vehicle 10.

In the formula, r is defined as the radius of the critical zone Z1. To the objects 11 within this radius r high importance is given and therefore the value of the safety coefficient $\gamma$ is high.

The objects 11 outside this radius r are weighted as (1/di), where $d_i$ is the distance d1, d2, d3, d4 of the object 11 to the vehicle.

Therefore, it can be understood from the figure 1 with the help of the formula, that the assigning of the safety coefficient $_\gamma$ to the accuracy metric m of the neural network NN is provided by the weightage of objects 11 detected by the neural network NN in the environment of the vehicle 10 individually for each object 11.

The weightage of objects 11 may be provided within a combined accuracy metric m for all objects detected in the environment of the vehicle. In this case, the safety coefficient $\gamma$ may comprise a complex weight for the combined accuracy metric m.

As it is shown above with the help of the formula, it is possible to provide an individual accuracy metric m for each object 11 detected by the neural network NN in the environment of the vehicle 10, wherein each individual accuracy metric m may be assigned an individual weight in the form of an individual safety coefficient $\gamma$. In this case, the safety coefficient $\gamma$ may comprise individual weights for corresponding individual accuracy metrics m provided individually for each object 11 detected in the environment of a vehicle 10, which may be summarized into the weighted metric.

Preferably, the weighted metric mr for the neural network NN may be provided for all objects 11 detected by the neural network NN in the environment of the vehicle 10.

As indicated in figure 1, a weightage of objects 11 detected by the neural network NN in the environment of the vehicle 10 may be executed in dependence on a distance d1, d2, d3, d4 of the objects 11 to the vehicle 10.

Further, a weightage of objects 11 detected by the neural network NN in the environment of the vehicle 10 may be executed in dependence on a detection zone Z1, Z2 with respect to the vehicle 10 in which the objects 11 are detected.

As it can be seen in figure 1 and in the formula, different detection zones Z1, Z2 may be determined with respect to the vehicle 10. Especially, different, in particular distance d1, d2, d3, d4 dependent, values of the safety coefficient $\gamma$ may be assigned to different detection zones Z1, Z2.

As it can be seen with the help of the formula, the objects 11 detected in the critical zone Z1 near to the vehicle 10 may be weighted with a first, especially distance d1, d2, d3, d4 dependent, value of the safety coefficient $\gamma$, and objects 11 detected in the extended zone Z2, in particular a zone within possible sensor range of the vehicle 10, may be weighted with a second, especially distance d1, d2, d3, d4 dependent, value of the safety coefficient $\gamma$.

Furthermore, a weightage of objects 11 detected by the neural network NN in the environment of the vehicle 10 may be executed in dependence on a size, a class and/or a degree of risk of the objects 11 individually for each object 11. Especially, a weightage may have a first value, especially a high value, for vulnerable objects 11a, like bicycles and/or pedestrians. Further, a weightage may have a second value, especially a low value, for robust objects 11b, like other vehicles and/or heavy trucks. Furthermore, a weightage may have a third value, especially a very low value, for objects of infrastructure, like buildings, and surroundings, like the sky. Thus, a simple and intuitive weighting of objects with respect of the security needs may be provided.

Preferably, the method may be executed for a variety of neural networks NN to find a (particular) neural network NN among a plurality of neural networks NN which receives the highest weighted metric mr and which is thus the safest for the use in the vehicle 10 for perception of an environment of a vehicle 10. Thus, the most suitable neural network NN with improved safety may be chosen for the use in the vehicle.

An assistance system 100 for a vehicle 10 comprising a chosen neural network NN which receives the highest weighted metric mr and which is thus the safest for the use in the vehicle 10 may provide the second aspect of the invention.

The vehicle 10 comprising a corresponding assistance system 100 provides the third aspect of the invention.

Also, a computer program product comprising a program code for carrying out a method as described above provides a further aspect of the invention.

The above description of the figures describes the present invention only in the context of examples. Of course, individual features of the embodiments may be combined with each other, provided it is technically reasonable, without leaving the scope of the invention.

**Reference signs**

| | |
|---|---|
| 10 | vehicle |
| 11 | object |
| 11a | vulnerable objects |
| 11b | robust objects |
| | |
| 100 | assistance system |
| | |
| $\gamma$ | safety coefficient |
| | |
| d1 | distance |
| d2 | distance |
| d3 | distance |
| d4 | distance |
| | |
| m | accuracy metric |
| mr | weighted metric |
| | |
| Z1 | zone |
| Z2 | zone |
| | |
| NN | neural network |

**Claims**

1. A method for assessment of a neural network (NN) suitable for perception of an environment of a vehicle (10), in particular of an automated or autonomous driving vehicle,

   in order to find a neural network (NN), especially among a plurality of neural networks, which is safe for the use in the vehicle (10), the method comprising the following steps:

   - measuring an accuracy of the neural network (NN) in order to provide an accuracy metric (m) of the neural network (NN),

- assigning a safety coefficient (γ) to the accuracy metric (m) of the neural network (NN) in order to provide a weighted metric (mr).

2. The method according to claim 1,
**characterized in that**
the measuring of the accuracy of the neural network (NN) is executed with the help of an intersection over union evaluation, especially if the neural network (NN) is a semantic segmentation network.

3. The method according to any one of the preceding claims 1 or 2,
**characterized in that**
the measuring of the accuracy of the neural network (NN) is executed with the help of a mean average precision evaluation, especially if the neural network (NN) is an object detection network.

4. The method according to any one of the preceding claims,
**characterized in that**

the assigning of the safety coefficient (γ) to the accuracy metric (m) of the neural network (NN) is provided by weightage of objects (11) detected by the neural network (NN) in the environment of the vehicle (10) individually for each object (11),
and/or the weighted metric (mr) for the neural network (NN) is provided for all objects (11) detected by the neural network (NN) in the environment of the vehicle (10).

5. The method according to any one of the preceding claims,
**characterized in that**

an individual accuracy metric (m) will be provided for each object (11) detected in the environment of a vehicle (10),
or a combined accuracy metric (m) will be provided for all objects detected in the environment of a vehicle (10),
and/or the safety coefficient (γ) comprises individual weights for corresponding individual accuracy metrics (m) provided individually for each object (11) detected in the environment of a vehicle (10), which will be summarized into the weighted metric (mr), or wherein the safety coefficient (γ) may comprise a complex weight for a combined accuracy metric (m) provided for all objects detected in the environment of a vehicle (10).

6. The method according to any one of the preceding claims,
**characterized in that**

a weightage of objects (11) detected by the neural network (NN) in the environment of the vehicle (10) is executed in dependence on a distance (d1, d2, d3, d4) of the objects (11) to the vehicle (10).

7. The method according to any one of the preceding claims,
**characterized in that**

a weightage of objects (11) detected by the neural network (NN) in the environment of the vehicle (10) is executed in dependence on a detection zone (Z1, Z2) with respect to the vehicle (10) in which the objects (11) are detected,
wherein especially different detection zones (Z1, Z2) are determined with respect to the vehicle (10),
wherein in particular different, especially distance (d1, d2, d3, d4) dependent, values of the safety coefficient (γ) are assigned to different detection zones (Z1, Z2).

8. The method according to any one of the preceding claims,
**characterized in that**
objects (11) detected in a critical zone (Z1) near to the vehicle (10) are weighted with a first, especially distance (d1, d2, d3, d4) dependent, value of the safety coefficient (γ), and/or objects (11) detected in an extended zone (Z2), in particular a zone within possible sensor range of the vehicle (10), are weighted with a second, especially distance (d1, d2, d3, d4) dependent, value of the safety coefficient (γ).

9. The method according to any one of the preceding claims,
**characterized in that**

a weightage of objects (11) detected by the neural network (NN) in the environment of the vehicle (10) is executed in dependence on a size, a class and/or a degree of risk of the objects (11) individually for each object (11),
especially wherein a weightage has a first value, especially a high value, for vulnerable objects (11a), like bicycles and/or pedestrians,
and/or wherein a weightage has a second value, especially a low value, for robust objects (11b), like other vehicles and/or heavy trucks,
and/or wherein a weightage has a third value, especially a very low value, for objects of infrastructure, like buildings, and surroundings, like the sky.

10. The method according to any one of the preceding claims,
**characterized in that**
the method is executed for the neural network (NN) using image-based environment models and/or 3D-based environment models.

11. The method according to any one of the preceding claims,
    **characterized in that**

    the neural network (NN) is configured to analyze sensor data, especially camera data, radar data and/or lidar data,
    and/or the neural network (NN) is configured to provide an image semantic segmentation or object detection.

12. The method according to any one of the preceding claims,
    **characterized in that**
    the method is executed for a variety of neural networks (NN) to find a neural network (NN) among a plurality of neural networks (NN) which receives the highest valuated metric (mr) and is thus the safest for the use in the vehicle (10) for perception of an environment of a vehicle (10).

13. An assistance system (100) for a vehicle (10), in particular for an automated or autonomous driving vehicle, comprising a neural network (NN) which receives a sufficient weighted metric (mr) by the method according to any one of the preceding claims 1 to 12, especially a highest valuated metric (mr) by the method according to claim 12.

14. A vehicle (10) comprising an assistance system (100) according to the preceding claim.

15. A computer program product comprising instructions which, when the program is executed by a computer, cause the computer to carry out a method according to any one of claims 1 to 12.

Fig. 1

Europäisches Patentamt
European Patent Office
Office européen des brevets

**EUROPEAN SEARCH REPORT**

Application Number

**EP 21 19 1340**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIRA MAAG ET AL: "Improving Video Instance Segmentation by Light-weight Temporal Uncertainty Estimates", ARXIV.ORG, CORNELL UNIVERSITY LIBRARY, 201 OLIN LIBRARY CORNELL UNIVERSITY ITHACA, NY 14853, 14 December 2020 (2020-12-14), XP081837654, * the whole document * | 1-15 | INV. G06N3/04 G06V10/82 G06V20/58 B60W60/00 G05D1/02 |
| X | WIRGES SASCHA ET AL: "Capturing Object Detection Uncertainty in Multi-Layer Grid Maps", 2019 IEEE INTELLIGENT VEHICLES SYMPOSIUM (IV), IEEE, 9 June 2019 (2019-06-09), pages 1520-1526, XP033606109, DOI: 10.1109/IVS.2019.8814073 [retrieved on 2019-08-26] * the whole document * | 1-15 | |
| X | SORIN GRIGORESCU ET AL: "A Survey of Deep Learning Techniques for Autonomous Driving", ARXIV.ORG, CORNELL UNIVERSITY LIBRARY, 201 OLIN LIBRARY CORNELL UNIVERSITY ITHACA, NY 14853, 17 October 2019 (2019-10-17), XP081627565, DOI: 10.1002/ROB.21918 | 1,13-15 | TECHNICAL FIELDS SEARCHED (IPC) G06N B60W G05D G06K G06V |
| A | * the whole document * | 2-12 | |

The present search report has been drawn up for all claims

| Place of search | Date of completion of the search | Examiner |
|---|---|---|
| Munich | 20 January 2022 | Cyranka, Oliver |

EPO FORM 1503 03.82 (P04C01)